# EUROPEAN PATENT SPECIFICATION

(11) **EP 1 934 431 B1**
(45) Date of publication and mention of the grant of the patent: **21.12.2016**
(21) Application number: 06775128.9
(22) Date of filing: 18.08.2006
(51) Int. Cl.: F01C 1/08, F01C 1/10, F02B 53/04

(54) **ENERGY TRANSFER MACHINE**
ENERGIEÜBERTRAGUNGSMASCHINE
MACHINE DE TRANSFERT D ÉNERGIE

(30) Priority: 18.08.2005 US 595933 P
(43) Date of publication of application: 25.06.2008
(73) Proprietor: Concept Solutions Inc., Langley, BC V1M 2R7 (CA)
(72) Inventor: KLASSEN, James B., Langley, BC V1M 3R7 (CA); BOEHM, David W., Summerland, BC V0H 1Z8 (CA)
(74) Representative: Shanks, Andrew
(86) International application number: PCT/CA2006/001356
(87) International publication number: WO 2007/019703

(56) References cited:
- CA-A1- 2 419 068
- US-A- 4 096 763
- US-A- 4 316 439
- US-A- 4 316 439
- US-A- 5 067 456
- US-A1- 2004 009 085
- US-B1- 6 305 345

## Description

### BACKGROUND

US Patent publication 20030209221 (the '221 publication, published November 13, 2003) discloses a two-dimensional rotary displacement device comprises a housing, an outer rotor and at least one inner rotor. The axes of rotation of the outer rotor and the at least one inner rotor are parallel. This geometry provides problems such as gyroscopic forces and centrifugal loading of the outer rotor associated with the large spinning mass of the outer rotor. US4316439 discloses a rotary engine operable as an internal combustion engine or powered from an external source, the engine comprising essentially three parts: an outer housing or body, a valve shaft extending axially through the body and having an eccentric mounted thereon, and a rotor journalled on the eccentric. The shape of the internal surface of the housing and the rotor is such as to define a plurality of variable volume working chambers between the rotor and the housing. The rotor and internal surface of the housing may be cylindrical with the variable volume working chambers formed by sealing means projecting from the rotor in contact with the internal surface of the housing. The rotor and internal surface of the housing may also have a multi-lobed configuration with there being one less projecting lobe on the rotor than lobes in the housing with the projecting lobes of the rotor being essentially the same size and shape as those of the housing.

### SUMMARY

An energy transfer machine is provided that uses at least one internal rotor spinning on a shaft. The shaft is fixed to a rotating carrier. As the carrier rotates, the inner rotor spins around the shaft and meshes with a fixed outer stator. The inner rotor and outer stator mesh together in such a way that positive displacement chambers are formed which change volume as the carrier rotates. These variable volume chambers may be used for example as combustion chambers in an internal combustion engine or to drive or be driven by fluid or gas. The inner rotor has outward projections, which may be referred to as for example lobes or teeth or vanes or protrusions. The outward projections may function as pistons. The stator has inward projections, which mesh with the outward projections of the inner rotor. The inward projections may be referred to as for example lobes or teeth or vanes or protrusions. The inward projections may function as the walls of cylinders, in which the outward projections move to create the variable volume chambers. More than one inner rotor with outward projections of the inner rotor meshing with the inward projections of the outer stator may be used.

In a method of operating an energy transfer machine, an inner rotor is caused to rotate within a carrier, where the carrier rotates in relation to an outer stator. Projections on the inner rotor mesh with projections on the stator to create variable volume chambers as the inner rotor rotates within the carrier. The inner rotor is caused to rotate by expansion of gases within the variable volume chambers or by rotation of the carrier. These and other features of energy transfer machines are set out in the claims.

### BRIEF DESCRIPTION OF THE FIGURES

Embodiments will now be described with reference to the figures, in which like reference characters denote like elements, by way of example, and in which:
Fig. 1 is a schematic of an energy transfer machine with a rotating carrier;
Fig. 2 is an isometric section view of the machine of Fig. 1 configured as an engine;
Fig. 3 is an isometric view of a stator for use with the machine of Fig. 2;
Fig. 4 is an isometric simplified view of an inner assembly for the machine of Fig. 2;
Fig. 5 is an isometric simplified view of the exhaust side of an inner assembly with carrier end plates removed in the machine of Fig. 2;
Fig. 6 is an isometric simplified view of the intake side of the assembly of Fig.
Fig. 7 is an isometric section view of the machine of Fig. 1 configured as a pump;
Figs. 8A-8E are a sequence of views showing operation of the machine of Fig.
Figs. 8F and 8G are views of energy transfer machines with features to allow use of the machines as expanders;
Fig. 9 is a side view of a plug for use in the machine of Fig. 7;
Fig. 10 is an isometric view, partly in section, showing plugs of Fig. 9 installed;
Fig. 11 illustrates a four inner rotor embodiment of an energy transfer machine; and
Fig. 12 shows an inner rotor and construction principles for use as the inner rotors of Fig. 11.

### DETAILED DESCRIPTION

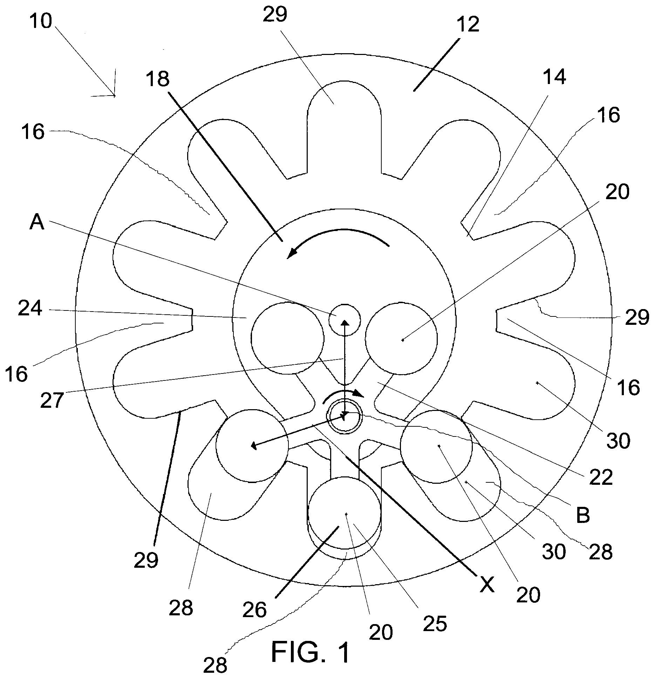

Referring to Fig. 1, there is shown an energy transfer machine 10 that has an outer stator 12 having an inward facing surface 14 and inward projections 16 arranged around the inward facing surface 14. A carrier 18 is secured for rotation, about an axis A, at least partly within the outer stator 12. An inner rotor 22 is secured for rotation about an axis B within the carrier 18. Axis A is parallel to axis B. The inner rotor 22 has an outward facing surface 24 and outward projections 26 arranged around the outward facing surface 24. The inward projections 16 project inward and the outward projections 26 project outward to mesh with each other and define variable volume chambers 28 between the inward projections 16 and the outward projections 26 as the inner rotor 22 rotates within the carrier 18. Fluid transfer passages, not shown in Fig. 1, are provided on at least one of the outer stator 12 and carrier 18 to permit flow of fluid into and out of the variable volume chambers 28. The parts shown may be made of any suitable material, including ceramic.

In the schematic of Fig. 1, the outward projections 26 of the inner rotor 22 are shown as an array of pistons 25 with center points 20 which are located a radius X from the rotational axis B of the inner rotor 22. The pistons 25 are shown with circular cross-section, but may have other shapes, and in particular the circular cross-section represents a section through a piston that may have various shapes that would fit in a corresponding cylinder such as spherical, conical, truncated conical or cylindrical. The length of radius X is equal to the offset distance 27 from the inner rotor rotational axis B to the carrier rotational axis A. The inward projections 16 of the outer stator 12 form an array of cylinders 29 each with a center axis which are all on the same plane as the spherical piston center points and which coincide at the carrier rotational axis A. Thus, in this embodiment, the outer stator 12 has twice as many cylinders 29 as the inner rotor 22 has spherical pistons 25.

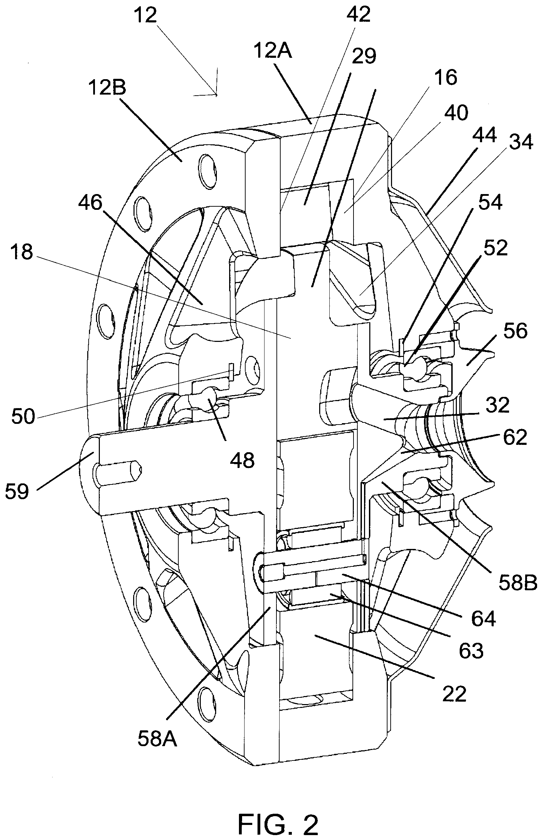

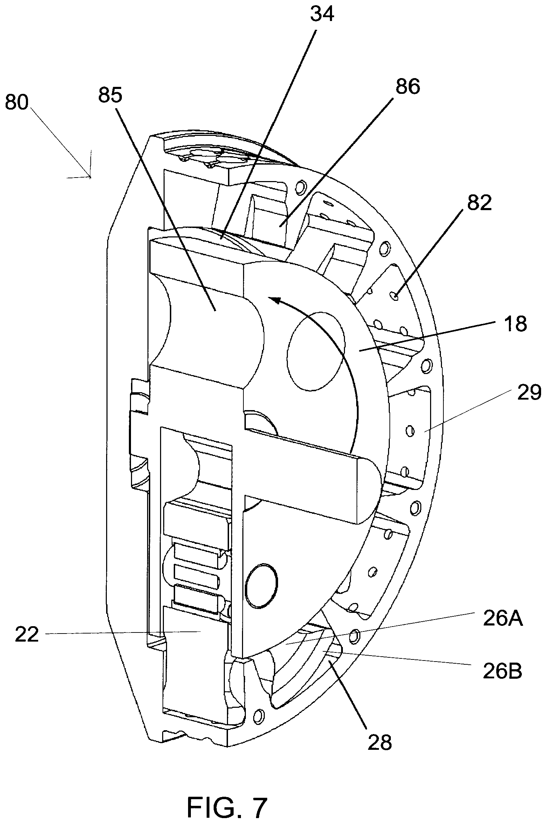

As the carrier 18 rotates, in this example, the spherical pistons 25 intermittently enter the cylinders 29 formed by inward projections 16 and compress the gas contained within the cylinders 29. This gas may then be expelled from the cylinders 29 by means of a one way valve (as for a compressor or vacuum pump application shown in Figs. 7-10). Alternatively, fuel can be injected and combusted (as with a diesel engine application) or an air/fuel mixture may be drawn or charged into the intake before the pistons 25 seal with the cylinders 29 formed by inward projections 16. This mixture may be combusted at or near maximum compression in an engine embodiment is shown for example in Figs. 2-6. Combustion may be initiated either by spark or some other type of ignition method, or by detonation if the temperature of the cylinder 29 and pistons 25 together with the heat of compression is high enough.

An embodiment with spherical pistons 25 and cylindrical cylinders 29 formed by inward projections 16 is a simple example used primarily for explanation. However, it may have benefits with regards to machining simplicity for certain applications; for example with relatively low pressure vacuum pump or compressor applications. Many other geometries may be used with this machine having a fixed outer stator 12 and rotating carrier 18, if the geometries provide a positive displacement characteristic for all or part of the compression and/or expansion phase of each piston-cylinder mesh.

Other positive displacement geometries may be used with a rotating carrier 18 and fixed outer stator 12. For example, although the number of projections Ns on the stator may be an integer multiple of the number of projections Nr on the inner rotor, this is not necessary in some embodiments. Hence, for example, in one embodiment Ns=Nr+1. For the piston 25 geometry, cylindrical or other shaped pistons (such as tapered cone or partial cone section) may be used as long as the piston, cylinder, or cone section center axis is perpendicular or nearly perpendicular to the rotational axis B of the inner rotor and carrier rotational axis A. Cylinder 29 shapes correspond to the shape of the pistons 25 to provide a positive displacement, sealed chamber for all or part of the compression and/or expansion. For example, a piston 25 with circular cross-section in the plane of Fig. 1 may have a square, trapezoidal or circular cross-section in a plane perpendicular to a radius of the inner rotor passing through the piston 25, in the case where the piston 25 is cylindrical, truncated conical or spherical respectively.

The outward projections 26 and inward projections 16 may be configured as shown for the pistons 25 and cylinder 29 geometry of Fig. 2 of the '221 publication, in which each outward projection 26 has a leg 26A and a foot 26B, such that foot 26B is wider than the leg 26A in the circumferential direction. This structure is shown in Figs. 2-8E. Each foot 26B is rounded to increase the surface area of the seal area, as the outward projections 26 move into and out of the cylinders 29 formed by the inward projections 16. A high displacement device in accordance with the machine shown in Fig. 1 is possible, that, compared with the device shown in the '221 publication, avoids problems such as gyroscopic forces and centrifugal loading of outer rotor associated with the large spinning mass of the outer rotor in the '221 publication. An energy transfer machine 10 as shown in Fig. 1 may also have increased sealing capacity of the sealed chambers 28 (by eliminating the outer-rotor-to-casing leakage path of the device of the '221 publication) and may operate as an internal combustion engine with higher power capacity due to the higher compression and/or combustion pressure capability as opposed to the external combustion engine described in the '221 publication.

Center points 20 of the projections 26 define a circle having radius X, which is the effective radius of the inner rotor 22. Points 30, which correspond to the points of maximum outward position of the points 20 as the inner rotor 22 rotates within the stator 12, define a circle having radius R, which is the effective radius of the virtual circle that the inner rotor 22 rotates within. In general, R is greater than X. In addition, R/X=Ns/Nr. When R=2X, as shown in Fig. 1, the path of a point 20 as the inner rotor 22 rotates in the stator 12 in relation to the stator 1 2 is a straight line as discussed in the '221 publication. In the embodiment when R=2X, the projections 26 may seal against the projections 16 during both compression and expansion. When R is not 2X, the projections 26 may seal with the projections 16 during compression or expansion but not both. For example, when R:X is 4:1 the path of a point 20 follows an astroid path. Such a path may be suitable for an embodiment, such as in a pump, where the use of one way valves makes sealing in either expansion or compression unnecessary. In general, the points 20 define hypocycloids, which is the path followed by a point on a circle rolling within a larger circle. In practice, the configuration of the projections 26 may have various geometries depending on the application. Points on the outer periphery of the inner rotor 22 that are not coincident with the points 20 will have slightly different paths from a hypocycloid. The paths of these other points will, in part, determine the configuration of the inner surface 14 of the stator 12. Material may be added to the outer periphery of the inner rotor 22 for example for wear purposes, and as a consequence, an equivalent amount of material may need to be removed from the inner surface 14 of the stator 12.

As indicated above, points 20 trace a circle of radius X during rotation in relation to the axis B. In relation to the stator 12, the points 20 trace straight lines that pass through the axis A. The sides of the cylinders 29 are corresponding straight lines that lie along the paths traced by outer edges of the pistons 25. These sides are parallel to or nearly parallel to and offset from the straight line defined by the path of the center points 20.

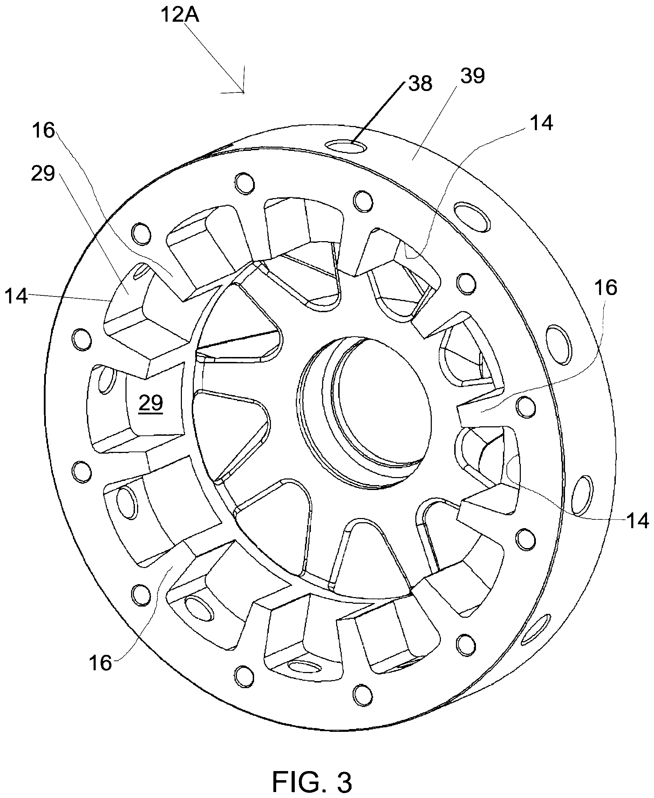

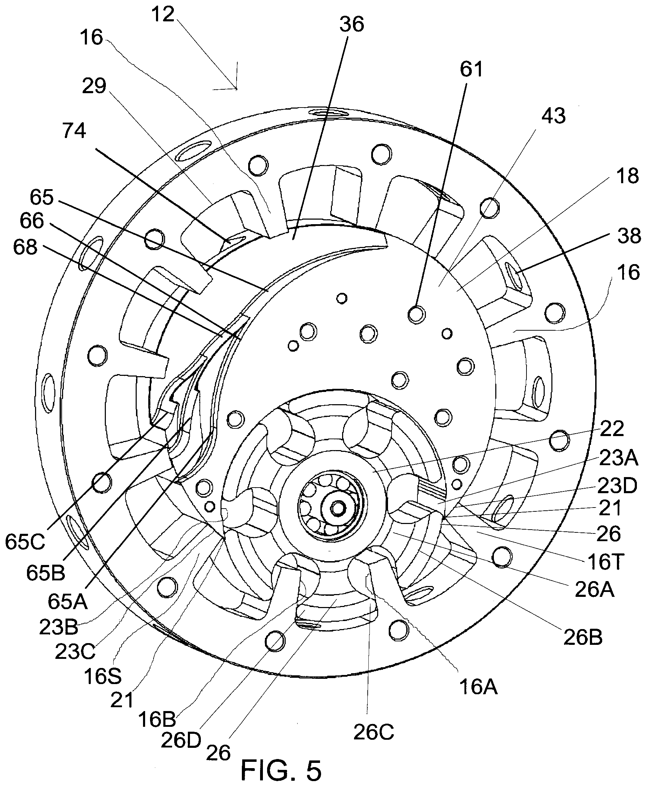

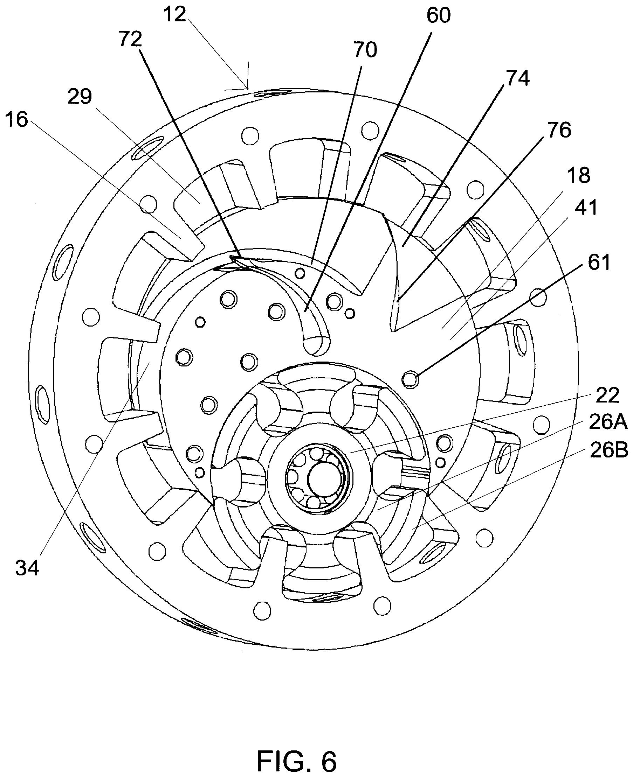

In one embodiment, an energy transfer machine 10 according to Fig. 1 configured as an engine has a single inner rotor 22 with half as many inner rotor pistons 25 as the outer stator 12 has cylinders 29. Figs. 2-6 show an energy transfer machine 10 arranged as an internal combustion engine, with fluid transfer passages comprising a fuel intake conduit 32, an array of air intake conduits 34 and exhaust plenum 36 on the carrier 18. Holes 38, extending from the outer rim 39 of outer stator 12 to the inner facing surface 14, may be present such that ignition elements may be placed in each cylinder 29 through the holes 38 (Fig. 3). Various ignition elements may be used depending on the application, or in a diesel or detonation configuration, the ignition elements may be omitted. In one embodiment, the carrier 18 has an air intake side 41, shown for example in Fig. 6, and an exhaust side 43, shown for example in Fig. 5.

In Fig. 2, the outer stator 12 is formed of two pieces, a fixed casing 12A that includes the inward projections 16, and walls 40 of one side of the cylinders formed by the inward projections 16, and a casing cover plate 12B that forms the walls 42 on the opposite side of the cylinders to the walls 40. The fixed casing 12A is shown separately in Fig. 3. The casing cover plate 12B includes exhaust ports 46. An air intake shroud 44 is attached to the fixed casing 12A. An exhaust shroud (not shown) may also be used. The carrier 18 is mounted on a first set of bearings 48 secured within the fixed casing 12B by a retaining ring 50, and on a second set of bearings 52 secured within the fixed casing 12A by a retaining ring 54. Lubrication and seals for the bearings 48, 52 may also be provided. Also attached to the fixed casing 12A is a fuel intake shroud 56. There are various ways to build the carrier 18, rotor 22 and stator 12, using one or more pieces, such as using two end plates sandwiching a central ring to form the stator. The carrier 18 does not need to be axially precisely positioned. The inner rotor 22 may also float axially on its shaft. The relative thicknesses of the inner rotor 22 and stator 12 hold the inner rotor in its correct axial position.

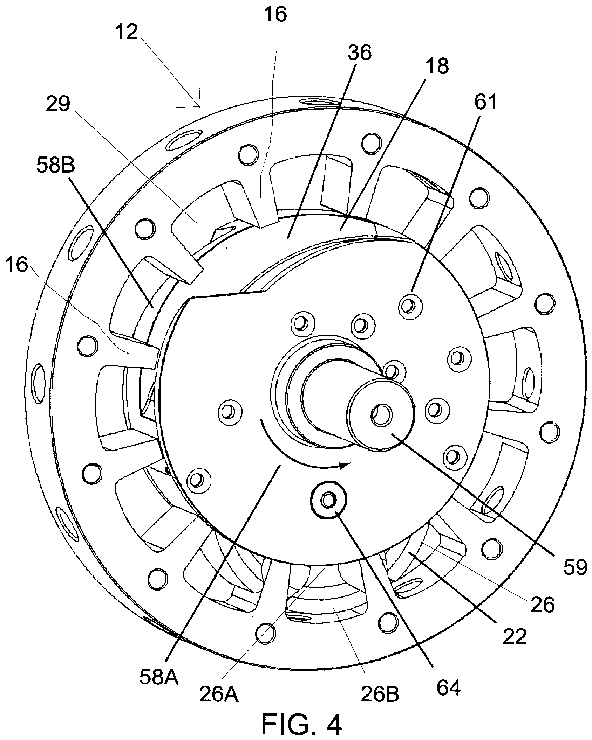

Attached on respective opposite sides of the carrier 18 are carrier end plates 58A and 58B. Carrier end plate 58A, shown in a full side view in Fig. 4, includes an output shaft 59. Bolts (not shown) are placed in bolt holes 61 to fasten the carrier end plates 58A, 58B to the carrier 18. Carrier end plate 58B includes a centrifugal fuel conduit 60 (Fig. 6), which is a continuation of the fuel intake conduit 32 (Fig. 2). A branch 62 (Fig. 2) of the fuel conduit 60 may be directed to bearings 63 rolling on the shaft 64 forming the rotational axis B of the inner rotor 22 for cooling and lubrication. Alignment means, such as dowels, may be used to achieve precision assembly and for example allow alignment of the axes A and B.

As shown in Fig. 5, the exhaust side 43 of the carrier 18 at least partially incorporates the exhaust plenum 36. In Fig. 5, the direction of rotation in normal operation of the energy machine is with the carrier 18 rotating counterclockwise as shown in the figure. A mirrored version of the device shown may be used for reverse rotation. The exhaust plenum 36 is at least partially bounded radially inward in the carrier 18 by a plenum surface 65 that, in a first portion 66 of the exhaust plenum 36, has generally increasing cross-section in the direction of exhaust flow. That is, as exhaust escapes the cylinders, the plenums have increasing cross-section in the direction of exhaust flow, which is opposite to the direction of rotation of the carrier in normal operation. Thus, the exhaust gases are vectored from radially inward to circumferential movement opposite to the direction of rotation of the carrier. A second portion 65B of the exhaust plenum 36 generally has increasing cross-section in the direction of exhaust flow. In one embodiment, the plenum surface 65 in the first portion of the exhaust plenum 36 has plural sections 65A, 65B, 65C, each section being staggered from each other section in the direction of rotation. Other numbers of cross-sections are possible, as many as may fit in the structure.

On the air intake side, shown in Fig. 6, the air intake side of the carrier 18 at least partially incorporates the air intake conduit 34. In this figure, the carrier 18 has a direction of rotation in normal operation that is clockwise in the figure. The air intake conduit 34 is at least partially bounded radially inward in the carrier 18 by an air intake surface 70 that slopes within the carrier 18 so that the air intake conduit 34 has decreasing cross-section in the direction of air flow. Thus, air is vectored radially outward opposite to the direction of carrier rotation relative to the carrier. The fuel intake conduit 60 extends from an inner part of the carrier 18 into the air intake conduit 34. A flow enhancer such as lip 72 at for example the junction between the air intake conduit 34 and the fuel intake conduit 60 is provided on the carrier 18 to induce turbulence in fuel being fed into the variable volume chambers 28 and assist in drawing air-fuel mixture from the conduit 60 by creating a low pressure region adjacent the lip 72. The carrier 18 may also be provided with a fresh air scavenge conduit 74 located forward on the carrier 18 relative to the air intake conduit 34 in the direction of rotation of the carrier 18. The fresh air scavenge conduit 74 is at least partially bounded radially inward in the carrier 18 by a scavenge surface 76 that slopes within the carrier 18. The purpose of the fresh air scavenge is to displace or partially displace combustion gases. As shown in Fig. 6, in one embodiment, the air intake surface 70 slopes at a lower angle than the scavenge surface 76.

The engine shown is analogous to a two-stroke piston engine cycle, but without many of the drawbacks of a two-stroke piston system.

A single inner rotor 22 allows the engine to use much of the carrier rotation between the end of the expansion phase and the beginning of the compression phase to exhaust the combusted fuel/air mixture from the cylinders and to provide a fresh charge of air for scavenging air and/or providing air/fuel mixture to the cylinders. A single rotor also allows the engine to use much of the carrier rotation between the end of the expansion phase and the beginning of the combustion phase to cool the compnents which are heated by the combustion phase. An outer stator provides the advantage of a much lower leakage gap due to the elimination of the leakage gap between the spinning outer rotor and the casing of the device of publication '221. The air scavenge features may be used for example to allow decreased emissions of unburnt fuel.

As shown in Fig. 5, for example, the projections 26 of the inner rotor 22 may each have a toe 26C and a heel 26D. The toe 26C and heel 26D in some embodiments are radiused as shown in Fig. 5. The radius provides for increased wear resistance of the toe 26C and heel 26D. Each toe 26C and heel 26D may be considered to be respective adjacent ones of the projections 26 illustrated in Fig. 1. That is, the foot 26B shown for example in Fig. 4 is made up of two cylindrical versions of the projections 26 of Fig. 1 joined together and connected with a single leg 26A to the remainder of inner rotor 22. Thus, the radius of one of the toes 26C or heels 26D functions in like manner to the radius of a projection 26 in Fig. 1. The sides 16A, 16B of the projections 16 in Fig. 4 follow the straight lines traced by the outer edges of the toe 26C and heel 26D respectively, these lines being offset and parallel or nearly parallel to the radial paths of the center points of the heel 26D and toe 26C. The sides 16A, 16B may be feathered, that is, cut-away slightly at their inner extremity to ease the transition of the pistons 26 in and out of the cylinders formed by the projections 16.

The ratio of R:X for the embodiment of Figs. 2-6 is 2:1, which means that points on the rotor foot 26B lying a distance X from the axis of the inner rotor move in straight lines in relation to the stator 12. The sides 16A, 16B, of the projections 16 thus contact the toes 26C and heels 26D as the centers of the arcs of the toes 26C and heels 26D follow their straight paths that extend radially through the carrier axis A. The location of the sides 16A, 16b of the projections 16 that contact the toe 26C and heel 26D is established by the path traced by the outer surfaces of the toe 26C and heel 26D as the outer surfaces of the toe 26C and heel 26D maintain a close tolerance or contact seal with the sides 16A, 16B of the projections 16. In a multiple inner rotor configuration, as used for example in a pump, where the ratio R:X is greater than 2, the paths traced by points on the feet of the projections 26 will follow hypocycloid or near hypocycloid paths, but will be in any event defined by well known mathematics describing the paths of points on or inside a circle rolling inside another circle. These paths, modified to account for any material loss or addition for example for wear purposes, define the shape of the sides 16A, 16B of the projections 16.

A more detailed description of the operating principle/cycle of an embodiment of the engine is as follows. Air is drawn into the engine through the intake shroud 44 as a result of the reduction of air pressure caused by the air intake 34 of the spinning carrier 18. The fuel can be added to this incoming air in various ways such as by a venturi as in a conventional carburetor, or by a fuel injector in combination with an air throttle valve to control the incoming air volume and to maintain the correct fuel-to-air mixture ratio for proper ignition and combustion if a spark ignition combustion is desired. The fuel may also be drawn in through the centrifugal fuel conduit 60, which allows fresh air to be drawn in first, to scavenge the combusted air via the fresh air scavenge conduit 74. If detonation ignition is used, then the amount of fuel is controlled to produce the desired power output.

The air and/or air/fuel mixture is then centrifugally charged into the stationary cylinders 29 defined by the inward projections 16 of the stator 12. The exhaust plenum 36 preferably closes once all of the combusted gases are expelled (and possibly some of the fresh air) but before any of the unburned fuel/air mixture can be expelled. The wedging effect of the carrier air intake plenum 34 insures that the desired initial pressure of the stationary cylinders 29 is reached before compression. This may be below, at, or above atmospheric pressure, depending on the design requirements.

For a detonation engine, the compressed cylinder volume is preferably lower than the desired volume necessary for detonation combustion (that is, the compression ratio is higher than necessary to produce the heat required for ignition). The air intake 34 is then throttled slightly to achieve the desired compression ratio to achieve detonation at or near maximum compression. A computer may be used to throttle air coming into the engine to achieve optimum full compression pressure (and therefore temperature) at various operating speeds and conditions. In this way it should be possible to actively control the amount of air entering the engine (by the throttle valve), and therefore the final compression pressure so ideal detonation operating parameters can be achieved for a wide range of speeds and power output. An engine such as this would likely require a spark ignition at low speeds such as when starting and then switch over to detonation when the required speed (for sealing and aerodynamic compression) is achieved. A glow plug may also be used to initiate detonation in certain conditions.

Just before the mechanical compression by the inner rotor 22 phase begins, the carrier 18 seals the cylinder volume completely. Mechanical compression then begins when the tips of the inner rotor feet 26B enter the cylinders 29. Ignition takes place at or near maximum compression. A close tolerance seal should exist between the outer surface 24 of the inner rotor feet 26B and the inner surface of the carrier 18. Thus, rotor foot 26 should make a close tolerance seal with the surface 23A of the carrier 18 shown in Fig. 5. Surface 23A is a rectangular surface in this embodiment that extends around the inner surface of the carrier 18 just inside the tip 21 of the carrier part that holds the inner rotor 22. Improved performance is obtained with a sharp tip 21, as well as a sharp corresonding tip on the other side of the opening that receives the inner rotor 22 in the carrier 18. A close tolerance seal should also exist between the corresponding surface 23B on the other side of the opening that receives the inner rotor 22 in the carrier 18. Also, a close tolerance seal should exist between the tips of the projections 16 and the carrier outer surfaces 23C and 23D, which in Fig. 5 are shown with a close tolerance seal with projections 16S and 16T respectively. Clearance should be provided between the carrier 18 and stator 12 to reduce friction and ease assembly. On the other hand, the flat face of the side of the inner rotor 22 and the flat face of the stator 12 have a close tolerance fit, for example with less than 0.001 inches clearance combined on both sides, hence less than 0.0005 inches clearance on each side. Such flat surfaces may be achieved for example by grinding.

Air flow should be permitted around the projections 16 that extend into the pockets between rotor feet 26B or air flow should be provided between adjacent pockets on either side of a rotor foot 26B. Such features avoid compressive work or forces due to air compression in the pockets between the rotor feet 26B.

If a spark ignition is used, then a spark plug with some sort of timing means may be used. A more simple system would use a single electrode or conductor on the outer surface of each inner rotor foot 26B which comes into close proximity with two or more electrodes on the outer surface of the cylinders defined by the inward projections 16. In one embodiment, high voltage electricity is supplied to one of the stationary electrodes on the cylinder, causing it to arc to the inner rotor electrode (or conductor) and then to the other stationary electrode which is grounded. An array of stationary electrodes may be used which are wired separately and supplied with spark producing voltage with some of these separately wired electrodes coming into spark proximity sooner than others. In this way, it is possible to change the ignition timing by simply diverting voltage from one set to the next. This spark ignition may also be used to increase the pressure in the chamber enough to initiate detonation and thereby reducing or eliminating the possibility of pre-detonation. Varying voltage may also be used to vary timing by causing the spark to jump the gap between the stator and the inner rotor at various rotor positions. Other ignition means using an external energy source, rather than heat resulting from compressive energy, may be used, particularly ignition means that increase the ignition speed, as are now known or hereafter developed.To facilitate fast ignition at high engine speeds, a series of electrodes or other ignition devices could be arrayed circumferentially along the inner surface of the stator cylinders and activated at the same time or in a desired pattern, such as sequentially. The ignition devices in one embodiment initiate a spark from the stator surface through the compressed gas to the outer surface of the inner rotor for one or more of the ignition devices, thereby maximizing the flame front surface area and the speed of combustion.

When combustion takes place and expansion begins, the vector force of pressure pushing against the outward facing surface 24 of the inner rotor feet 26B, causes the carrier 18 to rotate via the force transferred to the inner rotor shaft 64 and bearings 63. This expansion force happens N times per carrier rotation, where N is the number of cylinders defined by the inward projections 16. N may be for example 12 as in the embodiment shown. The expansion force is constantly overlapping, and in the 12 cylinder example gives the engine a twelve stroke high torque operating principle. Greater or fewer pistons 25 and cylinders 29 may also be used.

When the expansion phase is complete, any elevated pressure gases are preferably exhausted gradually, or in stages, and vectored away from the rotation of the carrier 18 though the vectored expansion plenums 65A, 65B, 65C, to provide extra rotational energy to the carrier 18. The first stage expansion plenum 65A has a very small cross section to make maximum use of the high pressure as it is vectored away from the rotation of the carrier 18. This will also have the benefit of reducing the sound wave energy (which usually accompanies internal combustion engines where the valves or ports open much more suddenly) because this escaping pressure is gradually released instead of all at once. The second vectored expansion plenum 65B has a larger cross section for capturing energy from the lower pressure that still remains after the first stage pressure drop and to insure that the pressure is reduced significantly before the last vectored plenum. The last vectored expansion plenum 65C is intended to capture remaining pressure energy if pressure still exists in the cylinder.

The depressurized gas is vectored axially by the exhaust plenum 65 toward the exhaust ports 46 and replaced with fresh air from the fresh air scavenge conduit 74 and the cycle is repeated.

Lubrication may be accomplished by the use of a common two-stroke fuel lubrication additive. For lower emissions, the use of a fuel such as a high lubricity diesel may provide enough lubrication on the compression side even though all of the fuel may be combusted on the expansion side. This is due to the fact that the compression phase pistons determine the position of the less lubricated expansion phase pistons. In addition, the cylinder walls which are radially inward from the expanding chamber, which are sealed from the combustion temperature and flame, should provide lubrication for the advancing (radially inward) pistons 25 contact.

Using detonation combustion intentionally is a problem for piston engines because the highest pressure phase, where detonation would occur, has a relatively long dwell time and so the detonated air/fuel mixture has a relatively long time where the increased pressure and temperature can cause damage to the pistons and cylinders. The disclosed engine, on the other hand, does not have this same sinusoidal compression/expansion profile and so the pistons 25 spend only a small fraction of the time at full compression where detonation could cause damage. Advantages of detonation combustion are believed to include higher power, lower emissions and higher efficiency.

Another embodiment of the energy transfer machine 10 shown in Fig. 1 is for use as a compressor or vacuum pump. The device in this embodiment may have less than half as many "pistons 25" on the inner rotor/s 22 as "cylinders 29" on the outer stator 12. An example of a compressor or pump is shown in Figs. 7-10. The geometry of the inner rotor 22 and carrier 18 of the pump 80 of Figs. 7-10 is the same as the corresponding parts of the pump of Fig 15 and 17 in the '221 publication. Unlike the device of the '221 publication, the pump 80 of Figs. 7-10 uses a fixed outer stator 12.

A device according to Fig. 1 may be used as a vacuum pump if gas is drawn into the center casing volume and expelled through one way valves in each cylinder as the inner rotor seals and compresses this gas to a higher pressure than is on the outside of the one way valves. The pump may be used as a compressive or non-compressive pump. In a pump embodiment, the output shaft of the carrier becomes a drive input.

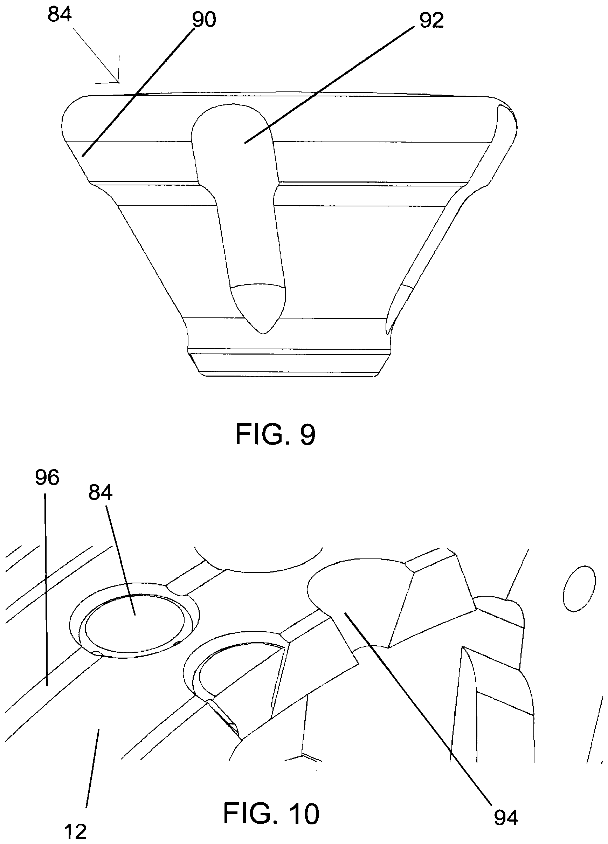

Shown in Fig. 7 is a simple but effective embodiment of a vacuum pump 80. As mentioned in the spherical piston 25 example of Fig. 1, each cylinder 29 defined by inward projections 16 has some type of one way valve as for example valves 82 which allows the pistons 25, defined by outward projections 26, to push gases out of the cylinders 29 but does not allow the gases to flow back in. The one way valves 82 may be tapered plugs 84 as shown in Fig. 9, or they may be reed valves or a single molded band, possibly with tapered or other-shaped protrusions or other suitable valves. Tapered plugs of some sort, whether individual plugs or multiple plugs molded as one piece to a flexible band or spring, are preferable because they allow a very low final compression volume, by filling the volume between the inner and outer surfaces of the stator and therefore providing high vacuum pressure and high efficiency or high compression pressure.

The embodiment of Figs. 7-10 may also be used as a compressor if an additional elevated pressure plenum is provided around the outside of the cylinders 29 to contain the air which is pushed past the valves (not shown in the drawings).

An important feature of this vacuum pump 80 (or compressor) design is a system of relief cuts or channels 86 which allow air to fill the expanding sealed chamber between each inner rotor foot 26B and cylinder 29 after each compression phase (12/carrier revolution in these examples) is complete. Balance bores 85 may be drilled in carrier 18 to offset weight distribution and/or reduce the overall weight of the unit.

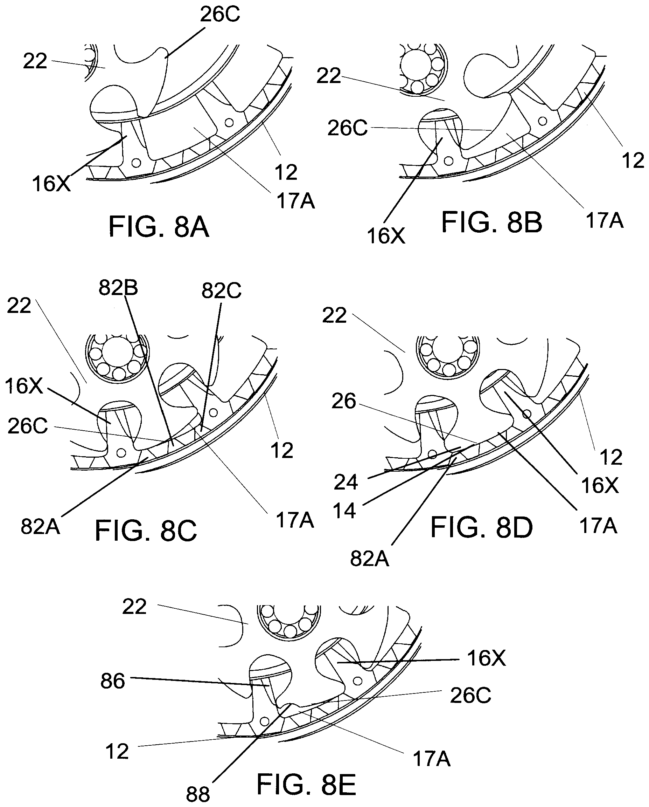

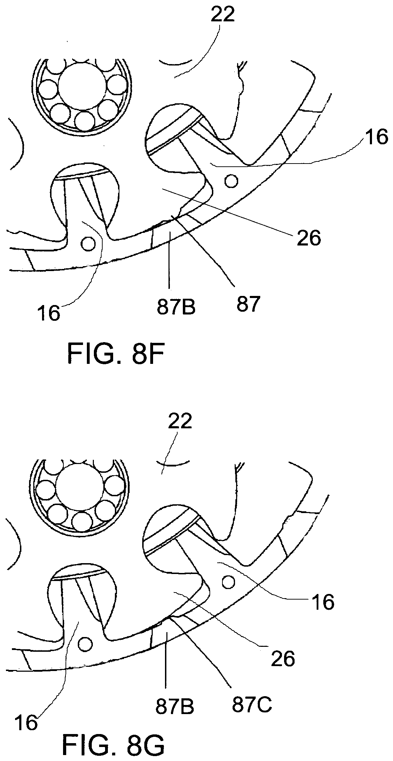

The example of Fig. 8 is shown with a single inner rotor 22, but multiple inner rotors 22 (or other piston/cylinder geometries or numbers) may also be used.

In Fig. 8A, inward projection 26C is about to enter chamber 1 7A defined by outward projections 16X. The projections 16X include the elements shown and the material forming the sidewalls of the chamber 17A. The carrier 18 may seal the cylinder chamber 17A before mechanical compression begins. In Fig. 8B, mechanical compression begins in chamber 17A as the leading edges and trailing edges of the projection 26C seal against the cylinder walls. In Fig. 8C, which shows the first part of the compression cycle, all three one way valves 82A, 82B, and 82C are available to expel pressurized gas. In Fig. 8D, the seal between the outward surface 24 of the inner rotor 22 and the inward surface 14 of the stator 12 moves across the chamber 1 7A in the direction of movement of the carrier 18. The seal in this case may for example be a contact or close tolerance seal or overlapping seal, such as a labyrinth seal. As the seal moves across the chamber 17A, each of the valves allows gas to escape. The final volume at this position can be extremely low. As little as 1/400th of the initial volume has been predicted by computer models which allows for very low vacuum pressure or high compression pressure. In Fig. 8E, cut-outs 86 in the cylinder wall (and/or could be in the piston 25 wall) allow gas to fill the expanding chamber 17A after compression is complete. A small pocket 88 in the foot 26C allows the trailing expansion volume to increase with a reduced vacuum spike. An embodiment with multiple rotors may eliminate or reduce air flow features such as cut-outs 86, 88 due to its inherent characteristic of unsealing during only one of the entry or exit of the foot into a cylinder. The valves 82 my also be located in the sidewalls of the chambers 1 7A.

In an expander configuration, two of which are shown in Figs. 8F and 8G, a feature is provided to cause inlet valves 87B to open. In the example of Fig. 8F, the feature is a bump 87 on the outer surface of the projection 26, while in the example of Fig. 8G, the feature is a bump 87C on the valve 87B. The valves 87B may otherwise be designed as valves 84. The features 87, 87C cause the valves 87b to open by mechanical pushing when the rotor is at or near full compression.

Fig. 9 shows a tapered plug 84. Tapered outer edge 90 positions the plug in a tapered bore in the outer stator 12. Relief cuts 92 allow pressure to equalize on all surfaces up to the seal face. On the narrower side of the plug 84, the taper is relieved to prevent higher pressure expelled air from creating too much sealing force as a result of increased surface area. The tapered plug 84 may be a separate part from a device used to hold the plug 84 in place, such as an elastic or spring means, and it may be molded as one part with such a device. As shown in Fig. 10, plugs 84 are shown in tapered bores 94 in the outer stator 12. A groove 96 may be provided in the tapered bore 94 for receiving an o-ring or spring or other resilient retainer device.

It is possible to completely eliminate the contact between pistons 25 and cylinders 29 (and thereby allow the use of non-lubricating fuels or gases) if the inner rotor/s 22 is/are geared to a fixed stator. The fixed stator gear is coaxial with the carrier rotational axis. In this case, the inner rotor is preferably fixed to a shaft which has a gear fixed to it inside a sealed, lubricated, chamber which rotates as an integrated part of the carrier. One or preferably two idler gears between the inner rotor/s gear transmits force to (or from) the fixed gear. In actuality, when the inner rotor geometry of Fig. 2 is used, there is very little force which must be transmitted through the gears, but higher speeds and pressures may be possible with this configuration with lower wear and reduced need for exotic materials for the pistons 25 and cylinders.

The use of different radii on the leading and trailing tips of the inner rotor feet 26B provides advantages. Different radii have the effect of changing the rotation force on the inner rotor 22 which is caused by the pressure of the compressing and or expanding gases. Different leading and trailing tip radii may be selected, tested and optimized to minimize the rotational force of the inner rotor 22 relative to the cylinders 29. A larger radius on one tip will generally result in a greater force (due to pressure) away from the larger radius tip (that is, rotationally in the direction of the smaller radius tip) as a result of a larger surface area affecting rotation of the inner rotor which the pressure is acting on.

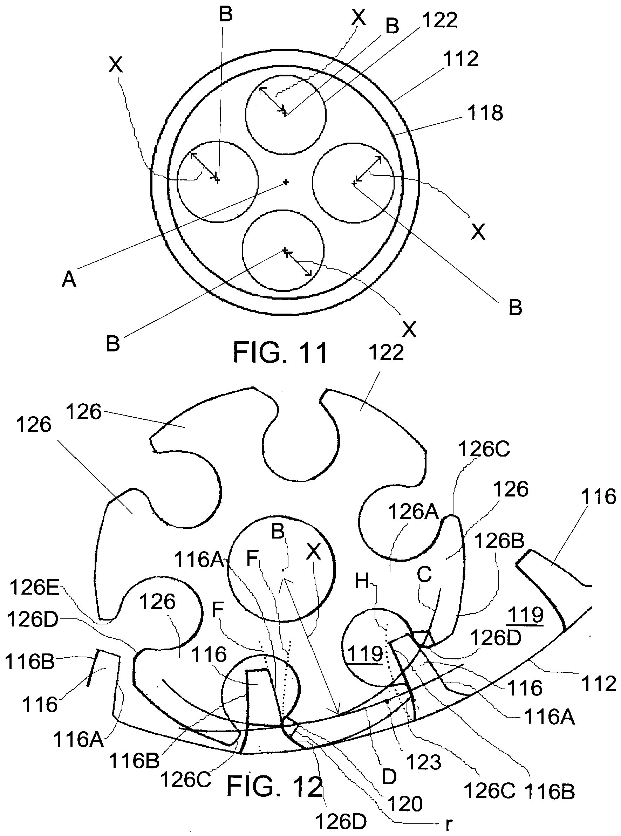

Fig. 11 shows schematically an embodiment of an energy transfer machine with a stator 112 containing an inner carrier 118 rotating about an axis A. Four identical inner rotors 1 22 rotate about respective axes B that are parallel to axis A. An embodiment with 2 or more inner rotors 122 has the advantage that it can be more readily balanced with respect to inertial loads and forces exerted by the fluid pressure in the cylinders. R in this case is equal to AB, the distance from A to B, plus 2X. If the ratio of R:X is not equal to 2 then the points on the inner rotors 1 22 will not follow straight lines, and the pistons of the inner rotors 122 can seal with the cylinders on the stator 112 only during one of compression and expansion and not both. For example, if AB equals 2X (that is, each rotor lies a distance X from the center axis A), then R:X=3 and each inner rotor 122 will rotate three times while the carrier 118 rotates once within the stator 112.

Fig. 12 shows an embodiment of an inner rotor 122 that may be used in the energy transfer machine of Fig. 11. The inner rotor 1 22 has six projections 1 26 rotating about axis B. Each projection 126 is formed from a foot 126B and a leg 1 26 A. Each foot 1 26B has a toe, 1 26C and heel 1 26D. Each heel 1 26D has an outer surface that is defined by a radius r about a point 120. As the point 120 rotates about the inner rotor axis B, it traces out a path C in the inner rotor frame of reference, and a hypocycloid path in relation to the stator 112, namely the path followed by a point on a circle rotating inside a large circle. The large circle in this case is a virtual circle part of which is shown by the arc D in Fig. 12. The exact equation for the path is well known mathematics and depends on the ratio R:X. Each point on the outer surface of the heel 1 26D thus traces a path that is offset from the path of the point 120 by an amount equal to the radius r. The path thus traced by the outer surface of the heel 1 26D is the position of the surface 116A of the projection 116 adjacent the heel 126D. In this manner, the heel 126D may maintain contact or sealing proximity with the adjacent projection 116 as it enters a cylinder 119 formed between two consecutive projections 116. The path traced by points on the heel 1 26D that contact the surface 116A is shown as line F. Additional material may be added to the base of the foot 126B to fill in the cylinder 119 when the projection 1 26 is at its deepest position in the cylinder 119.

For the toe 126C, slightly different considerations apply. A point 123 in the toe 126C lies outside the circle C. This point 123 follows a slightly modified hypocycloid path. This path is defined by the path of a point outside of a circle that rotates in a larger circle. The path has the shape shown for the surface 116B of each projection 116 and again is defined by known mathematics. The location of the surface 116B is offset perpendicularly from the path actually traced by the point 123 by an amount equal to the radius of the toe 126C, which radius is centered on the point 123. In one embodiment, the radius of the heel 126D is not equal to the radius of the toe 1 26C. The path of a point 1 26E at the extremity of the toe 1 26C is shown by the surface 116B and path H. Path H shows the path of the point 1 26C as it exits the cylinder 119. The maximum height of the projection 116 is thus determined by the need for the toe 126C to clear the projection 116. In this manner, the toe 126C may maintain contact or sealing proximity with the cylinder wall 116B during a compression stroke as the foot 126B enters the cylinder 119, but loses contact or sealing proximity with the cylinder wall 116B as the foot 1 26B exits the cylinder 119.

Thus, in the inner rotor 122, with R not equal to 2X, the foot 126B maintains contact or sealing proximity with the cylinder walls 116A and 116B as it enters the cylinder 119, and loses contact with the cylinder walls 116A and 116B as it exits the cylinder 119. For this reason, cut-outs 86, 88 as shown in Fig. 8E are not required if R is not equal to 2X. The embodiment of Figs. 11 and 12 is useful for a pump, vacuum pump or compressor used with one-way valves illustrated in relation to Figs. 7-10.

In one embodiment, several energy transfer machines as described may have their outputs coupled together for increased power. In the claims, the word "comprising" is used in its inclusive sense and does not exclude other elements being present. The indefinite article "a" before a claim feature does not exclude more than one of the feature being present. The various features of the energy transfer machine shown and its various embodiments described in this provisional patent application may operate with or without many of these features. The above description is only intended to describe exemplary embodiments. Other variations of the energy transfer machine are possible and are intended to be covered by the claims that follow.

## Claims

1. An energy transfer machine (10), comprising:
an outer stator (12) having inward projections (16) forming an array of cylinders (29);
a carrier (18) secured for rotation at least partly within the outer stator (12);
at least one inner rotor (22) secured for rotation about an axis within the carrier (18), the inner rotor (22) having outward projections (26) forming an array of pistons (25);
the inward projections (16) projecting inward and the outward projections (26) projecting outward to mesh with each other so that the pistons (25) intermittently enter the cylinders (29) and compress a fluid contained within the cylinders (29) thereby defining variable volume chambers (28) between the inward projections (16) and the outward projections (26) as the inner rotor (22) rotates within the carrier (18); and
fluid transfer passages (32, 34, 36) on at least one of the outer stator (12) and carrier (18) to permit flow of fluid into and out of the variable volume chambers (28).

2. The energy transfer machine of claim 1 arranged as an internal combustion engine.

3. The energy transfer machine of claim 2 in which the fluid transfer passages comprise a fuel intake conduit (32) and exhaust plenum (36) on the carrier (18).

4. The energy transfer machine of claim 3 further comprising an air intake conduit (34) in the carrier (18).

5. The energy transfer machine of claim 2 further comprising ignition elements arranged around the outer stator (12).

6. The energy transfer machine of claim 4 in which the carrier (18) has an air intake side and an exhaust side.

7. The energy transfer machine of claim 4 in which: the carrier (18) has a direction of rotation in normal operation; and the air intake conduit (34) has decreasing cross-section in the direction of air flow.

8. The energy transfer machine of claim 4 in which the fuel intake conduit (32) extends from an inner part of the carrier (18) into the air intake conduit (34).

9. The energy transfer machine of claim 8 in which a flow enhancer (72) is provided on the carrier (18) to enhance flow of fuel being fed into the variable volume chambers (28).

10. The energy transfer machine of claim 9 in which the flow enhancer (72) enhances the flow of fuel being fed into the variable volume chambers (28) by generating a region of low gas pressure.

11. The energy transfer machine of claim 10 in which the flow enhancer (72) is located at a junction between the air intake conduit (34) and the fuel intake conduit (32).

12. The energy transfer machine of claim 4 in which the carrier (18) has a direction of rotation in normal operation, and the energy transfer machine (10) further comprising a fresh air scavenge conduit (74) located forward on the carrier (18) relative to the air intake conduit (34) in the direction of rotation of the carrier (18).

13. The energy transfer machine of claim 3 in which the exhaust side of the carrier (18) at least partially incorporates the exhaust plenum (36).

14. The energy transfer machine of claim 13 in which: the carrier (18) has a direction of rotation in normal operation; and a first portion of the exhaust plenum (36) has an increasing cross-section in the direction of exhaust flow.

15. The energy transfer machine of claim 14 in which a second portion of the exhaust plenum (36) has an increasing cross-section in the direction of exhaust flow.

16. The energy transfer machine of claim 14 in which the plenum surface in the first portion of the exhaust plenum (36) has plural sections, each section being staggered from each other section in the direction of rotation.

17. The energy transfer machine of claim 1 in which each outward projection (26) is provided with a leg (26A) and terminates in a foot (26B) connected to the leg (26A).

18. The energy transfer machine of claim 1 arranged as a pump, with the fluid transfer passages (32, 34, 36) comprising one-way valves in the outer stator (12).

19. The energy transfer machine of any one of claims 1 to 18 in which the ratio of the number of inward projections (16) to the number of outward projections (26) that mesh with each other to define variable volume chambers (28) is 2:1.

20. The energy transfer machine of claim 19 in which the sides of the cylinders (29) define straight lines parallel to or nearly parallel to and offset from straight lines defined by paths of respective center points (20) of the outward projections (26).

21. The energy transfer machine of any one of claims 1 to 20 in which the inward projections (16) and the outward projections (26) are arranged to mesh with each other without circumferential sliding contact.

22. A method of operating an energy transfer machine, comprising the steps of:
causing an inner rotor (22) to rotate within a rotating carrier (18), where the carrier (18) rotates in relation to an outer stator (12), with projections (26) on the inner rotor (22) forming an array of pistons (25) and meshing with projections (16) forming an array of cylinders (29) on the stator (12) so that the pistons (25) intermittently enter the cylinders (29) and compress the gas contained within the cylinders (29) thereby defining variable volume chambers (28) as the inner rotor (22) rotates within the carrier (18);
in which the inner rotor (22) is caused to rotate by expansion of gases within the variable volume chambers (28) or by rotation of the carrier (18).

23. The method of claim 22 in which the energy transfer machine is operated as an engine.

24. The method of claim 23 in which air intake into the energy transfer machine is controlled by throttling.

25. The method of claim 23 further comprising the steps of: causing fuel to ignite within the variable volume chambers (28) by providing a sequence of ignition phases.

26. The method of any one of claims 22 to 25 in which the ratio of the number of projections (16) on the stator (12) to the number of projections (26) on the inner rotor (22) that mesh with each other to create variable volume chambers (28) is 2:1.

27. The method of any one of claims 22 to 25 in which the angular speed of rotation of the inner rotor (22), relative to the carrier (18), is equal and opposite to the angular speed of rotation of the carrier (18).

28. The method of any one of claims 22 to 25 in which the inner rotor (22) has an effective radius X and rotates within a virtual circle having radius R, and in which a point in the inner rotor (22) at a distance of X from the inner rotor axis in the carrier (18) undergoes radial motion relative to the stator (12) with respect to the axis of rotation of the carrier (18).

29. The method of claim 26 in which the sides of the cylinders (29) define straight lines parallel to or nearly parallel to and offset from straight lines defined by paths of respective center points (20) of the outward projections (26).

## Patentansprüche

1. Energieübertragungsmaschine (10), umfassend:
einen äußeren Stator (12) mit nach innen gerichteten Vorsprüngen (16), welche eine Anordnung von Zylindern (29) bilden;
einen Träger (18), welcher zumindest teilweise drehfest innerhalb des äußeren Stators (12) befestigt ist;
zumindest einen inneren Rotor (22), welcher drehfest um eine Achse innerhalb des Trägers (18) befestigt ist, wobei der innere Rotor (22) nach außen gerichtete Vorsprünge (26) aufweist, welche eine Anordnung von Kolben (25) bilden;
wobei die nach innen gerichteten Vorsprünge (16) nach innen vorspringen und die nach außen gerichteten Vorsprünge (26) nach außen vorspringen, um ineinander einzugreifen, sodass die Kolben (25) intermittierend in die Zylinder (29) eintreten und ein in den Zylindern (29) enthaltenes Fluid komprimieren, wodurch Kammern (28) mit veränderlichem Volumen zwischen den nach innen gerichteten Vorsprüngen (16) und den nach außen gerichteten Vorsprüngen (26) definiert werden, wenn der innere Rotor (22) innerhalb des Trägers (18) rotiert; und
Fluidübertragungsdurchgänge (32, 34, 36) auf zumindest einen von dem äußeren Stator (12) und dem Träger (18), um ein Strömen des Fluids in die und aus den Kammern (28) mit veränderlichem Volumen zu ermöglichen.

2. Energieübertragungsmaschine nach Anspruch 1, welche als Verbrennungsmotor ausgebildet ist.

3. Energieübertragungsmaschine nach Anspruch 2, in der die Fluidübetragungsdurchgänge eine Kraftstoffeinlassleitung (32) und ein Abgasplenum (36) auf dem Träger (18) umfassen.

4. Energieübertragungsmaschine nach Anspruch 3, ferner umfassend eine Lufteinlassleitung (34) im Träger.

5. Energieübertragungsmaschine nach Anspruch 2, ferner umfassend Zündelemente, welche um den äußeren Stator (12) angeordnet sind.

6. Energieübertragungsmaschine nach Anspruch 4, in welcher der Träger (18) eine Lufteinlassseite und eine Abgasseite aufweist.

7. Energieübertragungsmaschine nach Anspruch 4, in welcher: der Träger (18) eine Drehrichtung im normalen Betrieb aufweist; und wobei die Lufteinlassleitung (34) einen in der Luftströmungsrichtung abnehmenden Querschnitt aufweist.

8. Energieübertragungsmaschine nach Anspruch 4, in welcher die Kraftstoffeinlassleitung (32) sich von einem inneren Teil des Trägers (18) in die Lufteinlassleitung (34) erstreckt.

9. Energieübertragungsmaschine nach Anspruch 8, in welcher ein Strömungsverbesserer (72) auf dem Träger (18) vorgesehen ist, um die in die Kammern mit veränderlichem Volumen (28) eingespeiste Kraftstoffströmung zu verbessern.

10. Energieübertragungsmaschine nach Anspruch 9, in welcher der Strömungsverbesserer (72) die in die Kammern mit veränderlichem Volumen (28) eingespeiste Kraftstoffströmung verbessert, indem er einen Bereich niedrigen Gasdrucks erzeugt.

11. Energieübertragungsmaschine nach Anspruch 10, in welcher der Strömungsverbesserer (72) an einer Verbindungsstelle zwischen der Lufteinlassleitung (34) und der Kraftstoffeinlassleitung (32) angeordnet ist.

12. Energieübertragungsmaschine nach Anspruch 4, in welcher der Träger (18) eine Drehrichtung im normalen Betrieb aufweist und die Energieübertragungsmaschine (10) ferner eine Frischluftspülleitung (74) umfasst, welche vorne auf dem Träger (18) in Bezug auf die Lufteinlassleitung (34) in der Drehrichtung des Trägers (18) angeordnet ist.

13. Energieübertragungsmaschine nach Anspruch 3, in welcher die Abgasseite des Trägers (19) zumindest teilweise das Abgasplenum (36) integriert.

14. Energieübertragungsmaschine nach Anspruch 13, in welcher: der Träger (18) eine Drehrichtung im normalen Betrieb aufweist; und ein erster Teil des Abgasplenums (36) einen in der Abgasströmungsrichtung steigenden Querschnitt aufweist.

15. Energieübertragungsmaschine nach Anspruch 14, in welcher ein zweiter Teil des Abgasplenums (36) einen in der Abgasströmungsrichtung steigenden Querschnitt aufweist.

16. Energieübertragungsmaschine nach Anspruch 14, in welcher die Plenumoberfläche im ersten Teil des Abgasplenums (36) mehrere Abschnitte aufweist, wobei jeder Abschnitt in Bezug auf jeden anderen Abschnitt in der Drehrichtung versetzt angeordnet ist.

17. Energieübertragungsmaschine nach Anspruch 1, in welcher jeder nach außen gerichtete Vorsprung (26) einen Schenkel (26A) aufweist und mit einem am Schenkel (26A) befestigten Fuß (26B) endet.

18. Energieübertragungsmaschine nach Anspruch 1, welche als Pumpe ausgebildet ist, wobei die Fluidübertragungsdurchgänge (32, 34, 36) Einwegventile im äußeren Stator (12) umfassen.

19. Energieübertragungsmaschine nach einem der Ansprüche 1 bis 18, in welcher das Verhältnis zwischen der Anzahl von nach innen gerichteten Vorsprüngen (16) und der Anzahl von nach außen gerichteten Vorsprüngen (26), welche ineinander eingreifen, um Kammern (28) mit veränderlichem Volumen zu definieren, 2:1 beträgt.

20. Energieübertragungsmaschine nach Anspruch 19, in welcher die Seiten der Zylinder (29) gerade Linien definieren, welche sich parallel oder nahezu parallel zu und versetzt von geraden Linien erstrecken, welche durch Bahnen der jeweiligen Mittelpunkte (20) der nach außen gerichteten Vorsprünge (26) definiert sind.

21. Energieübertragungsmaschine nach einem der Ansprüche 1 bis 20, in welcher die nach innen gerichteten Vorsprünge (16) und die nach außen gerichteten Vorsprünge (26) so angeordnet sind, dass sie ineinander eingreifen, ohne einen Umfangsgleitkontakt aufzuweisen.

22. Verfahren zum Betreiben einer Energieübertragungsmaschine, umfassend die folgenden Schritte:
Veranlassen, dass ein innerer Rotor (22) innerhalb eines sich drehenden Trägers (18) rotiert, wobei der Träger (18) relativ zu einem äußeren Stator (12) rotiert, wobei Vorsprünge (26) auf dem inneren Rotor (22) eine Anordnung von Kolben (25) bilden und in Vorsprünge (16) eingreifen, die eine Anordnung von Zylindern (29) auf dem Stator (12) bilden, sodass die Kolben (25) intermittierend in die Zylinder (29) eintreten und das in den Zylindern (29) enthaltene Gas komprimieren, wodurch Kammern (28) mit veränderlichem Volumen definiert werden, wenn der innere Rotor (22) innerhalb des Trägers (18) rotiert;
wobei der innere Rotor (22) durch die Expansion von Gasen innerhalb der Kammern (28) mit veränderlichem Volumen oder durch die Drehung des Trägers (18) in Drehung versetzt wird.

23. Verfahren nach Anspruch 22, wobei die Energieübertragungsmaschine als Motor betrieben wird.

24. Verfahren nach Anspruch 23, wobei der Lufteinlass in die Energieübertragungsmaschine durch Drosseln gesteuert wird.

25. Verfahren nach Anspruch 23, ferner umfassend die folgenden Schritte: Veranlassen, dass Kraftstoff innerhalb der Kammern (28) mit veränderlichem Volumen mittels einer Folge von Zündphasen gezündet wird.

26. Verfahren nach einem der Ansprüche 22 bis 25, wobei das Verhältnis zwischen der Anzahl von Vorsprüngen (16) auf dem Stator (12) und der Anzahl von Vorsprüngen (26) auf dem inneren Rotor (22), welche ineinander eingreifen, um Kammern (28) mit veränderlichem Volumen zu definieren, 2:1 beträgt.

27. Verfahren nach einem der Ansprüche 22 bis 25, wobei die Winkelrotationsgeschwindigkeit des inneren Rotors (22) relativ zum Träger (18) gleich und entgegengesetzt zu der Winkelrotationsgeschwindigkeit des Trägers (18) ist.

28. Verfahren nach einem der Ansprüche 22 bis 25, wobei der innere Rotor (22) einen effektiven Radius X aufweist, und innerhalb eines virtuellen Kreises mit Radius R dreht, und wobei ein Punkt im inneren Rotor (22) in einem Abstand X von der Achse des inneren Rotors im Träger (18) eine radiale Bewegung relativ zum Stator (12) in Bezug auf die Drehachse des Trägers (18) erfährt.

29. Verfahren nach Anspruch 26, wobei die Seiten der Zylinder (29) gerade Linien definieren, welche sich parallel oder nahezu parallel zu und versetzt von geraden Linien erstrecken, welche durch Bahnen von jeweiligen Mittelpunkten (20) der nach außen gerichteten Vorsprünge (26) definiert sind.

## Revendications

1. Machine de transfert d'énergie (10), comprenant :
un stator externe (12) présentant des parties saillantes vers l'intérieur (16) formant une série de cylindres (29) ;
un élément porteur (18) maintenu au moins partiellement au sein du stator externe (12) en vue de sa rotation ;
au moins un rotor interne (22) maintenu autour d'un axe au sein de l'élément porteur (18), le rotor interne (22) présentant des parties saillantes vers l'extérieur (26) formant une série de pistons (25) en vue de sa rotation ;
les parties saillantes vers l'intérieur (16) faisant saillie vers l'intérieur et les parties saillantes vers l'extérieur (26) faisant saillie vers l'extérieur afin d'engrener les unes avec les autres de telle manière que les pistons (25) pénètrent par intermittence dans les cylindres (29) et compriment un fluide contenu au sein des cylindres (29), ce qui définit des chambres à volume variable (28) entre les parties saillantes vers l'intérieur (16) et les parties saillantes vers l'extérieur (26) lorsque le rotor interne (22) tourne au sein de l'élément porteur (18) ; et
des passages de transfert de fluide (32, 34, 36) sur au moins un parmi le stator externe (12) et l'élément porteur (18) afin de permettre une circulation de fluide jusque dans des chambres à volume variable (28) et hors de celles-ci.

2. Machine de transfert d'énergie selon la revendication 1, conçue en tant que moteur à combustion interne.

3. Machine de transfert d'énergie selon la revendication 2, dans laquelle les passages de transfert de fluide comprennent une conduite d'admission de carburant (32) et un plenum d'échappement (36) sur l'élément porteur (18).

4. Machine de transfert d'énergie selon la revendication 3, comprenant en outre une conduite d'admission d'air (34) dans l'élément porteur (18).

5. Machine de transfert d'énergie selon la revendication 2, comprenant en outre des éléments d'allumage agencés autour du stator externe (12).

6. Machine de transfert d'énergie selon la revendication 4, dans laquelle l'élément porteur (18) présente un côté admission d'air et un côté échappement.

7. Machine de transfert d'énergie selon la revendication 4, dans laquelle : l'élément porteur (18) présente une direction de rotation en fonctionnement normal ; et la conduite d'admission d'air (34) présente une section transversale qui décroit dans la direction de la circulation d'air.

8. Machine de transfert d'énergie selon la revendication 4, dans laquelle la conduite d'admission de carburant (32) s'étend depuis une partie interne de l'élément porteur (18) jusque dans la conduite d'admission d'air (34).

9. Machine de transfert d'énergie selon la revendication 8, dans laquelle un améliorateur de circulation (72) est fourni sur l'élément porteur (18) afin d'améliorer une circulation du carburant qui est alimenté dans les chambres à volume variable (28).

10. Machine de transfert d'énergie selon la revendication 9, dans laquelle l'améliorateur de circulation (72) améliore la circulation du carburant qui est alimenté dans les chambres à volume variable (28) en générant une région de basse pression de gaz.

11. Machine de transfert d'énergie selon la revendication 10, dans laquelle l'améliorateur de circulation (72) est situé au niveau d'une jonction entre la conduite d'admission d'air (34) et la conduite d'admission de carburant (32).

12. Machine de transfert d'énergie selon la revendication 4, dans laquelle l'élément porteur (18) présente une direction de rotation en fonctionnement normal, et la machine de transfert d'énergie (10) comprend en outre une conduite de récupération d'air frais (74) située à l'avant de l'élément porteur (18) par rapport à la conduite d'admission d'air (34) dans la direction de rotation de l'élément porteur (18).

13. Machine de transfert d'énergie selon la revendication 3, dans laquelle le côté échappement de l'élément porteur (18) incorpore au moins partiellement le plenum d'échappement (36).

14. Machine de transfert d'énergie selon la revendication 13, dans laquelle l'élément porteur (18) présente une direction de rotation en fonctionnement normal ; et une première partie du plenum d'échappement (36) présente une section transversale qui augmente dans la direction de circulation d'échappement.

15. Machine de transfert d'énergie selon la revendication 14, dans laquelle une deuxième partie du plenum d'échappement (36) présente une section transversale qui augmente dans la direction de circulation d'échappement.

16. Machine de transfert d'énergie selon la revendication 14, dans laquelle la surface de plenum dans la première partie du plenum d'échappement (36) présente plusieurs sections, chaque section étant décalée par rapport à chaque autre section dans la direction de rotation.

17. Machine de transfert d'énergie selon la revendication 1, dans laquelle chaque partie saillante vers l'extérieur (26) est munie d'une patte (26A) et se termine par un pied (26B) raccordé à ladite patte (26A).

18. Machine de transfert d'énergie selon la revendication 1, conçue en tant que pompe, les passages de transfert de fluide (32, 34, 36) comprenant des clapets anti-retour dans le stator externe (12).

19. Machine de transfert d'énergie selon l'une quelconque des revendications 1 à 18, dans laquelle le rapport du nombre de parties saillantes vers l'intérieur (16) sur le nombre de parties saillantes vers l'extérieur (26) qui engrènent les unes avec les autres pour définir des chambres à volume variable (28) est de 2:1.

20. Machine de transfert d'énergie selon la revendication 19, dans laquelle les côtés des cylindres (29) définissent des lignes droites parallèles à ou à peu près parallèles à, et décalées par rapport à, des lignes droites définies par des cheminements de points centraux (20) respectifs des parties saillantes vers l'extérieur (26).

21. Machine de transfert d'énergie selon l'une quelconque des revendications 1 à 20, dans laquelle les parties saillantes vers l'intérieur (16) et les parties saillantes vers l'extérieur (26) sont conçues pour engrener les unes avec les autres sans contact circonférentiel glissant.

22. Procédé d'exploitation d'une machine de transfert d'énergie, comprenant les étapes consistant à :
provoquer la rotation d'un rotor interne (22) au sein d'un élément porteur rotatif (18), où l'élément porteur (18) tourne par rapport à un stator externe (12), des parties saillantes (26) présentes sur le rotor interne (22) formant une série de pistons (25) et engrenant avec des parties saillantes (16) formant une série de cylindres (29) sur le stator (12) de telle manière que les pistons (25) pénètrent par intermittence dans les cylindres (29) et compriment le gaz contenu au sein des cylindres (29), ce qui définit des chambres à volume variable (28) lorsque le rotor interne (22) tourne au sein de l'élément porteur (18);
dans lequel le rotor interne (22) est amené à tourner en raison d'une expansion des gaz se trouvant au sein des chambres à volume variable (28) ou d'une rotation de l'élément porteur (18).

23. Procédé selon la revendication 22, dans lequel la machine de transfert d'énergie est exploitée comme un moteur.

24. Procédé selon la revendication 23, dans lequel l'admission d'air dans la machine de transfert d'énergie est commandée grâce à la sollicitation d'une commande d'accélération.

25. Procédé selon la revendication 23, comprenant en outre l'étape consistant à : amener du carburant à s'enflammer au sein des chambres à volume variable (28) en fournissant une séquence de phases d'allumage.

26. Procédé selon l'une quelconque des revendications 22 à 25, dans lequel le rapport du nombre de parties saillantes (16) présentes sur le stator (12) sur le nombre de parties saillantes (26) présentes sur le rotor interne (22) qui engrènent les unes avec les autres pour créer des chambres à volume variable (28) est de 2:1.

27. Procédé selon l'une quelconque des revendications 22 à 25, dans lequel la vitesse angulaire de rotation du rotor interne (22) par rapport à l'élément porteur (18) est égale et opposée à la vitesse angulaire de rotation de l'élément porteur (18).

28. Procédé selon l'une quelconque des revendications 22 à 25, dans lequel le rotor interne (22) présente un rayon efficace X et tourne au sein d'un cercle virtuel présentant un rayon R, et dans lequel un point dans le rotor interne (22) situé à une distance de X par rapport à l'axe de rotor interne dans l'élément porteur (18) subit un mouvement radial par rapport au stator (12) en ce qui concerne l'axe de rotation de l'élément porteur (18).

29. Procédé selon la revendication 26, dans lequel les côtés des cylindres (29) définissent des lignes droites parallèles à, ou à peu près parallèles à, et décalées par rapport à, des lignes droites définies par des cheminements de points centraux (20) respectifs des parties saillantes vers l'extérieur (26).
